(19) Europäisches Patentamt / European Patent Office / Office européen des brevets

(11) **EP 2 766 825 B1**

(12) # FASCICULE DE BREVET EUROPEEN

(45) Date de publication et mention
de la délivrance du brevet:
**06.01.2016 Bulletin 2016/01**

(21) Numéro de dépôt: **12772912.7**

(22) Date de dépôt: **09.10.2012**

(51) Int Cl.:
**G06F 17/27** (2006.01)   **G06K 9/62** (2006.01)
**G10L 25/33** (2013.01)   **G10L 19/022** (2013.01)

(86) Numéro de dépôt international:
**PCT/EP2012/069962**

(87) Numéro de publication internationale:
**WO 2013/053705 (18.04.2013 Gazette 2013/16)**

(54) **SYSTEME ET PROCEDE NON SUPERVISE D'ANALYSE ET DE STRUCTURATION THEMATIQUE MULTI RESOLUTION DE FLUX AUDIO**

NICHT ÜBERWACHTES SYSTEM UND VERFAHREN FÜR EINE THEMATISCHE ANALYSE MIT MEHRFACHER AUFLÖSUNG UND STRUKTURIERUNG VON AUDIOSTRÖMEN

NON-SUPERVISED SYSTEM AND METHOD FOR MULTIRESOLUTION THEMATIC ANALYSIS AND STRUCTURING OF AUDIO STREAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.10.2011 FR 1103084**

(43) Date de publication de la demande:
**20.08.2014 Bulletin 2014/34**

(73) Titulaire: **THALES**
**92200 Neuilly-sur-Seine (FR)**

(72) Inventeurs:
• **RAVERA, Bertrand**
**F-92622 Gennevilliers Cedex (FR)**
• **CAPMAN, François**
**F-92622 Gennevilliers Cedex (FR)**
• **LECOMTE, Sébastien**
**F-92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:

**WO-A2-2010/122056   US-A1- 2004 186 704**

• **YUXIN PENG, ZHIWU LU, JIANGUO XIAO: "Semantic concept annotation based on audio PLSA model", PROCEEDINGS OF THE 17TH ACM INTERNATIONAL CONFERENCE ON MULTIMEDIA, 19 octobre 2009 (2009-10-19), pages 841-844, XP002676455,**
• **ANNAMARIA MESAROS, TONI HEITTOLA, ANSSI KLAPURI: "LATENT SEMANTIC ANALYSIS IN SOUND EVENT DETECTION", 19TH EUROPEAN SIGNAL PROCESSING CONFERENCE (EUSIPCO 2011), 29 août 2011 (2011-08-29), pages 1307-1311, XP002676456,**
• **SEBASTIEN LECOMTE ET AL: "Abnormal events detection using unsupervised One-Class SVM - Application to audio surveillance and evaluation -", ADVANCED VIDEO AND SIGNAL-BASED SURVEILLANCE (AVSS), 2011 8TH IEEE INTERNATIONAL CONFERENCE ON, IEEE, 30 août 2011 (2011-08-30), pages 124-129, XP032053735, DOI: 10.1109/AVSS.2011.6027306 ISBN: 978-1-4577-0844-2**
• **SEBASTIEN LECOMTE ET AL: "One Class Support Vector Machines for audio abnormal events detection", STATISTICAL SIGNAL PROCESSING WORKSHOP (SSP), 2011 IEEE, IEEE, 28 juin 2011 (2011-06-28), pages 489-492, XP031908029, DOI: 10.1109/SSP.2011.5967739 ISBN: 978-1-4577-0569-4**

**Description**

L'invention concerne un système et un procédé automatique non supervisé d'analyse et de structuration thématique multi-résolution de flux audio. De manière générale, l'invention concerne des applications de surveillance et d'analyse de contenu de flux audio.

Elle s'applique notamment dans les domaines de la surveillance et de l'analyse d'environnements. Elle est utilisée pour des signaux audio se basant sur des thèmes ou des sujets, c'est-à-dire composés de motifs sonores se répétant dans le temps.

La présente invention peut être utilisée :

- dans le cadre de la recherche multimédia: la recherche s'effectuant dans un espace thématique,
- dans le cadre de résumé automatique de flux audio: les thèmes majeurs d'un document étant par essence un résumé potentiel de ce dernier; dans le cadre d'une indexation de documents audio, la structuration optimale de base de données multimédia étant basée sur un catalogue thématique,
- dans le cadre de la reconnaissance de langues : les propriétés phonotactiques propres à chaque langue étant perçues comme des thèmes ou des concepts discriminants,
- dans le domaine de la compression audio : la structuration de flux audio en thèmes étant avantageusement incluse dans un schéma de compression par dictionnaire de formes (schéma classique en compression audio), la compression des formes étant optimisée par thèmes.

L'invention permet aussi l'analyse à long terme d'une activité sonore ou acoustique représentative d'un environnement et de l'activité s'y déroulant.

Dans la suite de la description l'expression « flux audio » et « signal audio » désignent un même objet.

Le terme « trame » est relatif à une fenêtre d'analyse temporelle. Initialement la trame est constituée d'échantillons mais par abus de langage du domaine on parle aussi de trame pour un vecteur de paramètres acoustiques extrait sur une trame de signal.

Un document audio dans le cadre de la présente description est une suite de segments qui peuvent se représenter sur la base de thèmes. Un segment est donc une suite de trames consécutives. L'un des objectifs de la présente invention est de trouver la taille optimale des documents en fonction de la vraisemblance des thèmes obtenus de façon à segmenter en thèmes pertinents un flux audio.

Un segment est un ensemble de trames (nombre de trame variable et potentiellement une seule trame). Le segment est issu de la segmentation temporelle. Pour chaque segment un représentant du segment est calculé. Ce représentant est un vecteur de paramètres acoustiques.

Un audio est le représentant d'une classe. Ce mot est obtenu dans notre cas par un algorithme de clustering non supervisé:

A partir des vecteurs acoustiques le procédé va regrouper par classe (clustering) les vecteurs proches dans l'espace acoustique. Chaque classe possède un représentant privilégié ou centroid. Ce représentant (centroid) est le mot audio.

Dans les applications de reconnaissance de phénomènes sonores dans un flux audio, les problèmes techniques à résoudre sont notamment les suivants :

- Comment détecter des ensembles et/ou des suites d'évènements sonores et/ou anormaux caractéristiques et représentatifs d'un environnement,
- Comment obtenir des solutions robustes au bruit de fond et à ses variabilités.

Dans le domaine de la surveillance et de l'analyse d'environnements, les systèmes conventionnels et connus de l'art antérieur s'appuient principalement sur les technologies de traitement d'images et de vidéos.

L'analyse thématique d'un document (texte ou audio) est la phase qui vise à en établir la signification en utilisant le sens des éléments unitaires ou mots du document.

La notion de mot est étendue au domaine audio, et dans la description on parlera indifféremment de mot ou de mot « audio ». Le modèle obtenu par analyse sémantique latente plus connu sous l'abréviation anglo-saxonne LSA (abréviation anglo-saxonne de Latent SemanticAnalysis), est un outil qui rend compte de relations lexicales sémantiques à partir de la distribution des cooccurrences de mots audio dans un contexte prédéfini ou environnement. Ce modèle LSA permet l'analyse de documents dans un espace de représentations caractéristiques des concepts ou thèmes d'un ou plusieurs documents.

Un thème est alors caractérisé par l'occurrence d'un ensemble de mots audio partageant des liens sémantiques.

Des versions probabilistes du modèle LSA ont été proposées. Les modèles connus de l'Homme du métier tels que le modèle PLSA (abréviation anglo-saxonne de Probabilistic Latent Semantic Analysis) ou le modèle LDA (abréviation anglo-saxonne de Latent Dirichlet Allocation) sont basés comme le modèle LSA sur l'analyse de l'occurrence des mots afin d'en déduire un ensemble de concepts représentatifs par le biais de variables aléatoires latentes (inférence Bayésienne). Ces modèles plus performants que le modèle LSA ont été utilisés avec succès à l'analyse de textes mais aussi à l'analyse d'images et de vidéos (indexation, classification et fouille).

Ces méthodes (LSA, PLSA, LDA, ...) malgré leurs performances, présentent toutefois les inconvénients suivants : elles sont issues de l'analyse de texte et reposent sur l'analyse conjointe d'un ensemble documents. Dans le cas de flux audio, par exemple, la taille des flux audio n'est plus clairement définie et les méthodes connues de l'état de l'art actuel utilisent un a priori arbitraire qui consiste à choisir une taille de document unique et fixe, le document étant assimilé au flux audio.

Ces modèles ne permettent donc pas de réaliser une segmentation précise sans adjoindre à l'analyse une phase de regroupement des documents en concepts identiques. Dans le cas de flux audio et/ou vidéo, le problème est d'autant plus important que la notion même de taille de document n'est pas clairement définie.

Le document intitulé « Semantic concept annotation based on audio PLSA model » de Yuxin Peng et al, Proceedings of the 17th ACM international conférence on multimedia, 19 octobre 2009, pages 841-844 décrit un procédé non supervisé d'analyse et de structuration thématique d'un flux audio.

Dans la suite de la description, les termes suivant seront utilisés

P : Nombre de vecteurs (ou classes) au plus bas niveau du dendrogramme.

M: Nombre de mots « audio » du dictionnaire.

S : segment de taille fixe ou variable.

$c_k$ : Centroide d'indice k.

$x_n$ : Vecteur n du segment S.

$d(S, \mathbf{c}_k)$ : Distance entre le segment S et le centroide $c_k$.

Q : Nombre de classes les plus proches du segment S utilisé pour la classification floue.

wf(S,k) : Degré d'appartenance du segment S à la classe k.

wf(S, k = 1, ..., Q): Q degrés d'appartenance associés par classification floue au segment S.

F : indice flou.

N : Nombre de documents.

$d_j$ : Document d'indice j

D : Ensemble de N documents.

$w_i$ : Mot d'indice i

W: Ensemble de M mots.

K : Nombre de thèmes ou de sujets

$z_k$: Thème d'indice k

Z : Ensemble de K thèmes

$P(w_i, d_j)$ : Probabilité conjointe de documents et de mots

$P(d_j)$ : Probabilité d'un document $d_j$.

$P(w_i|z_k)$ : Probabilité d'observer un mot $w_i$ sachant le thème $z_k$.

$P(z_k|d_j)$ : Probabilité d'observer le thème $z_k$ sachant le document $d_j$.

$P(w_i|d_j)$ : Probabilité conditionnelle d'un mot $w_i$ dans un document $d_j$.

L(P|D): Log-vraisemblance des paramètres du modèle P.

$n(w_i,d_j)$ : Terme de la matrice de cooccurrence de taille M x N.

$Ns(j)$ : Nombre maximum de segment du document $d_i$.

$L(W|d_{test})$ : Log-vraisemblance du modèle PLSA inféré pour le document $d_{test}$.

tmin : Taille minimum d'un document.

tmax : Taille maximum d'un document.

ps : Pas de segmentation

$l_i$ : Vraisemblance du document i.

$s_i$ : Instant de début du document i.

$t_i$ : Taille d'un document i.

$f_i$: Instant de fin du document i.

O : Sous ensemble optimal de documents sans recouvrement temporel dont la somme des vraisemblances $l_i$ est maximale.

L'un des objets de la présente invention concerne un procédé qui repose sur une sélection optimale au sens de la vraisemblance, non supervisée, de la taille des documents en se basant sur une recherche exhaustive des supports temporels sur lesquels la vraisemblance des documents par rapport aux concepts/thèmes est la plus forte. La recherche optimale est effectuée sur un ensemble de tailles ou de durées différentes et sur un ensemble de positions initiales et finales de documents au sein d'un flux audio à analyser.

L'invention concerne un procédé non supervisé d'analyse et de structuration thématique d'un flux audio, ledit flux audio comprenant un ensemble de documents constitués chacun de plusieurs segments, ledit flux audio comprenant un ou plusieurs motifs ou thèmes répétés dans le temps et contenus dans des modèles prédéfinis caractérisé en ce qu'il comporte au moins les étapes suivantes :

- Extraire les paramètres acoustiques du flux audio à analyser, E1
- Une étape de segmentation bas niveau dudit flux audio afin d'obtenir un ensemble de segments S, E2, un segment correspondant à une concaténation de trames successives,
- Une étape de classification floue desdits segments en utilisant un dictionnaire de M mots audio prédéfinis afin de caractériser chaque segment S par un ensemble de Q mots audio et de Q degrés d'appartenance $wfk$ d'un mot à une classe, E4, un mot audio étant le représentant d'un ensemble de segments similaires,
- Générer une matrice de cooccurrence pour chaque document dudit flux audio, un élément $n(wi, dj)$ de la matrice de cooccurrence correspond à une combinaison des degrés d'appartenance de tous les mots du document $dj$ proche de la classe $i$ (au sens de la classification floue), la taille $M*N$ de la matrice correspond au nombre M de mots audio et N au nombre de documents, E5a, , une classe étant définie comme un ensemble de segments similaires,
- Pour un ensemble fini de segmentation (taille de document $ti$, début de l'analyse du flux audio) et sur la base de la matrice de cooccurrence associée, déterminer, par adaptation des modèles prédéfinis comprenant des thèmes ou motifs répétitifs d'un flux audio, les vraisemblances $li$ associées à chaque couple (taille de document $ti$, début d'analyse), E5c, la taille de document appartenant à un intervalle prédéfini $[tmin, tmax]$,
- Rechercher la segmentation optimale en termes de taille de document, au sens du maximum de vraisemblance pour chaque triplet (taille du document, début d'analyse, vraisemblance) par application d'un algorithme de type programmation dynamique, E6, sous la contrainte de sélectionner des documents sans recouvrement temporel.

Le procédé peut comporter une étape d'apprentissage adaptée à générer le dictionnaire des mots audio et les modèles statistiques comprenant au moins les étapes suivantes :

- Une étape d'extraction des paramètres acoustiques du flux audio à analyser, E1,
- Une étape de segmentation bas niveau dudit flux audio afin d'obtenir un ensemble de segments S, E2,
- Une étape de construction non supervisée d'un dictionnaire de mots audio, E3,
- Une étape de classification floue desdits segments en utilisant un dictionnaire de mots audio prédéfinis afin de caractériser un segment S par un ensemble de Q mots audio et Q degrés d'appartenance $wfk$ d'un segment à une classe, E4,
- Générer une matrice de cooccurrence, pour chaque document dudit flux audio, un élément $n(wi, dj)$ de la matrice correspond à une combinaison des degrés d'appartenance de tous les mots du document $dj$ proche de la classe $i$ au sens de la classification floue, la taille de la matrice correspond au nombre M de mots et au nombre de documents $M*N$, afin de modéliser la manière dont les mots audio apparaissent dans un document, E5a,
- Estimer des modèles statistiques adapté de façon à décomposer un flux audio en un mélange de thèmes définis comme une distribution multinomiale de mots d'un dictionnaire et représentatifs de la probabilité conditionnelle d'observer d'un mot dans un flux audio, E5b.

L'étape de segmentation bas niveau est, par exemple, une segmentation uniforme avec des segments de taille fixe.

L'étape de segmentation bas niveau peut être exécutée avec des segments de taille variable.

L'étape de segmentation bas niveau est, par exemple, une segmentation par dendrogramme.

La construction non supervisée du dictionnaire de mots audio peut être exécutée en regroupant les segments par classe à l'aide d'un algorithme de type LBG.

Le procédé selon l'invention utilise, par exemple, un modèle statistique de type PLSA défini comme un mélange caractérisant un modèle de probabilité conjointe de documents et de mots.

Selon une variante de réalisation, on estime les paramètres du modèle PLSA en maximisant la log-vraisemblance donnée par un algorithme de type EM (Expectation Maximisation).

L'algorithme de programmation dynamique peut mettre en oeuvre un algorithme d'ordonnancement d'intervalles pondérés.

L'invention concerne aussi un système non supervisé d'analyse et de structuration thématique d'un flux audio, ledit flux audio comprenant un ensemble de documents constitués chacun de plusieurs segments, ledit flux audio comprenant un ou plusieurs motifs ou thèmes répétés dans le temps, ledit système étant adapté à mettre en oeuvre le procédé comprenant l'une des caractéristiques précitées caractérisé en ce qu'il comporte au moins les éléments suivants :

- Une base de données comprenant un dictionnaire préétabli de mots audio, et des modèles statistiques,
- Un ou plusieurs capteurs acoustiques reliés à un module d'analyse comprenant un premier module d'extraction des paramètres acoustiques dudit flux audio, ledit premier module étant relié à une mémoire tampon, la sortie de la mémoire tampon étant reliée à un module de classification floue desdits segments issus de la mémoire tampon, un module de construction de matrices de cooccurrence et d'adaptation des modèles, un module adapté à déterminer la vraisemblance des modèles et un module de recherche de segmentation optimale exécutant un algorithme de type programmation dynamique appliqué aux mesures de vraisemblance.

Le système peut comporter une chaîne d'apprentissage comprenant au moins les éléments suivants :

Un ou plusieurs capteurs acoustiques, un dispositif comprenant un filtre et un convertisseur analogique puis un module adapté à extraire des paramètres acoustiques et une mémoire tampon reliée à un module de création de mots audio et un module de classification et un module de création de modèles statistiques, l'ensemble des mots audio et des modèles statistiques issus de ce module d'apprentissage sont mémorisés dans une base de données.

D'autres caractéristiques et avantages du dispositif selon l'invention apparaîtront mieux à la lecture de la description qui suit d'un exemple de réalisation donné à titre illustratif et nullement limitatif annexé des figures qui représentent :

- La figure 1, un exemple d'architecture système selon l'invention,

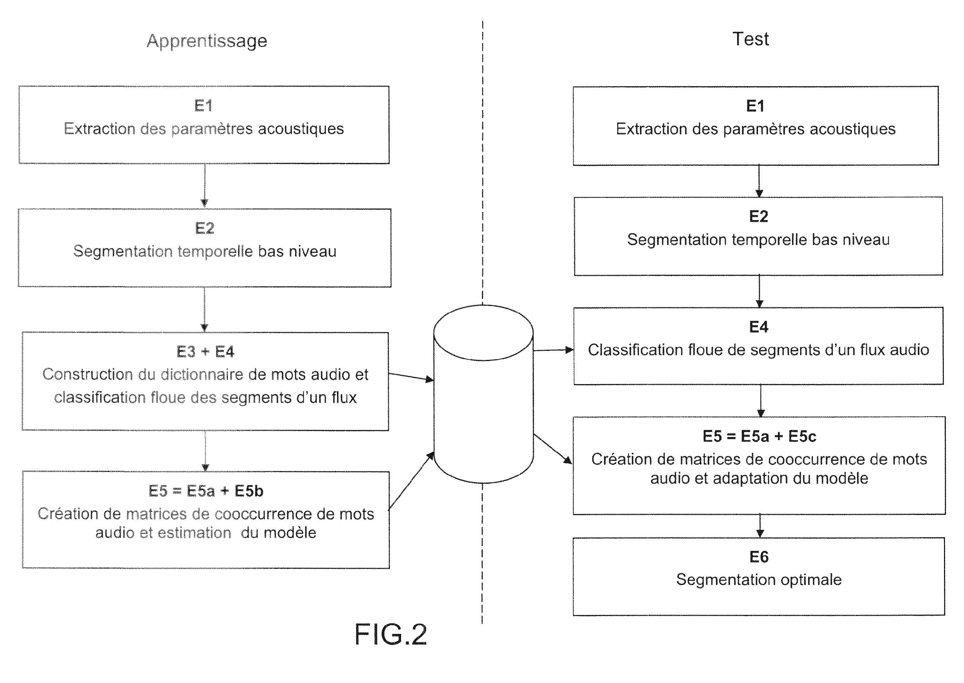

- La figure 2, un organigramme des étapes principales du procédé selon l'invention,

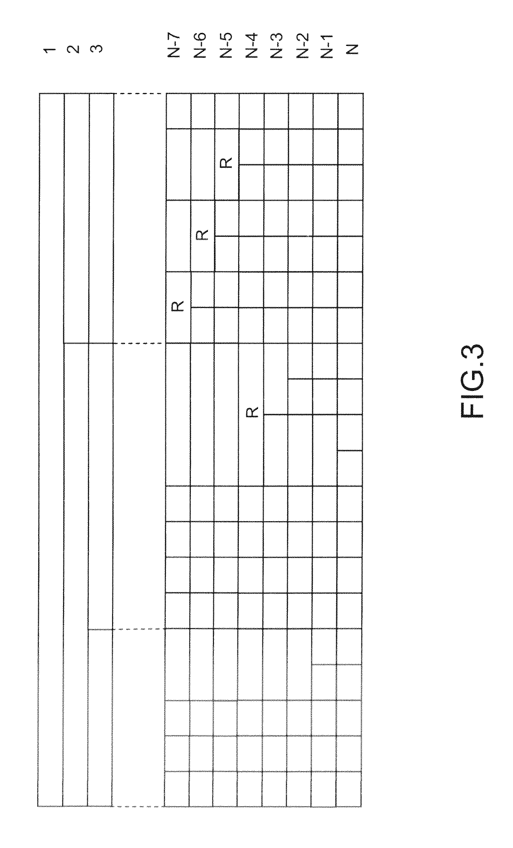

- La figure 3, une illustration d'un exemple de segmentation bas niveau avec un regroupement selon N classes,
- La figure 4, un schéma d'analyse sémantique multi-résolution pour une segmentation de bas niveau de taille fixe,
- La figure 5, un schéma d'analyse sémantique multi-résolution pour une segmentation bas niveau de taille variable,
- La figure 6, un schéma de segmentation Optimale par Programmation Dynamique, et
- La figure 7 un exemple de système selon l'invention.

Afin de mieux faire comprendre le fonctionnement du procédé et du système selon l'invention, la description va être décrite en référence à la surveillance d'une station de métro où les flux audio ou signaux sonores ont tous une structure temporelle commune. Cette structure est basée, par exemple, sur l'arrivée et le départ des trains. Les thèmes les plus représentés dans ce cas sont : l'arrivée d'un train, l'ouverture des portes, la descente et la montée des voyageurs, la fermeture des portes et le départ du train. Un signal sonore à analyser verra dans ce cas au moins 4 thèmes ou motifs répétés dans le temps.

En fonction des horaires de la journée, le rythme des trains varie, en conséquence la durée des différents évènements propre à chaque thème ou motif est variable. Par exemple, une période d'attente entre deux trains peut être variable en durée et en contenu, en fonction de l'affluence, par exemple, mais les thèmes ou motifs représentant cette période d'attente proviendront de modèles statistiques proches. La vraisemblance de ces modèles sera, par essence, maximale sur ces périodes d'attente. Un raisonnement similaire peut être appliqué dans le cas d'évènements plus courts, comme l'arrivée, le départ ou la fermeture/ouverture des portes.

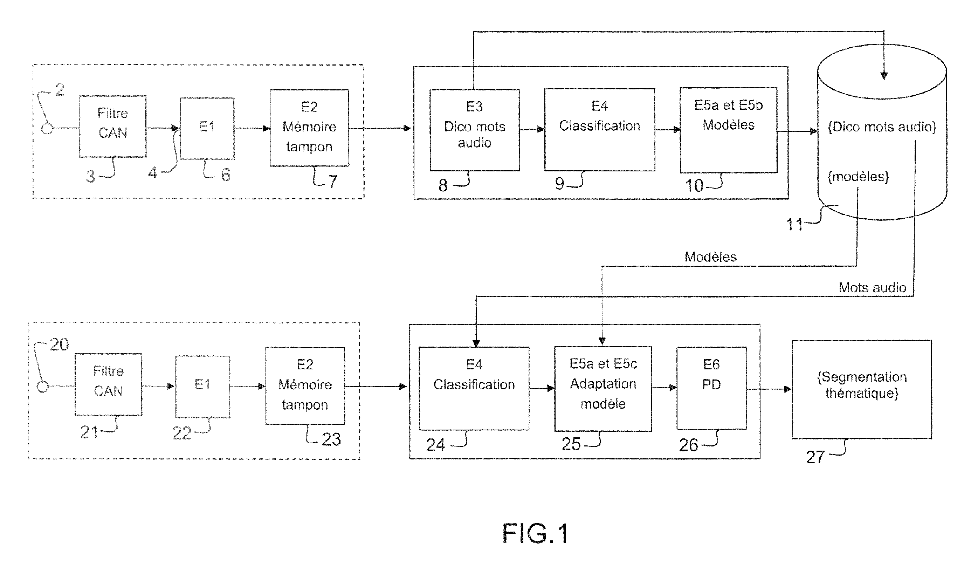

La figure 1 représente un exemple de système de détection mis en place pour analyser le contenu de signaux sonores ou flux audio dans un environnement sous surveillance, ici un quai de métro.

Le système 1 comprend un ou plusieurs capteurs acoustiques 2, tels que des microphones, de bruits sonores présents dans une zone à surveiller ou pour laquelle une analyse d'évènements sonores est demandée. Les données reçues sur un capteur acoustique sont transmises tout d'abord à un dispositif 3 comprenant un filtre et un convertisseur analogique connus de l'Homme du métier, puis via une entrée 4 à un module 6 réalisant l'extraction de paramètres acoustiques et une mémoire tampon 7 de type premier entré premier sortie plus connu sous l'abréviation anglo-saxonne « FIFO » (pour First In First Out). La mémoire tampon 7 est utilisée afin de procéder à une segmentation temporelle bas niveau. La sortie de la mémoire tampon alimente un module d'apprentissage. Le module d'apprentissage a notamment pour fonction, lors d'une phase d'apprentissage, de générer un ensemble de « mots audio » (module 8 de création et 9 de classification) utilisés lors de la suite de l'analyse d'un flux audio ou signal sonore, et des modèles statistiques (module 10). L'ensemble des mots audio et des modèles statistiques issus de ce module d'apprentissage sont mémorisés dans une base de données 11. Cette base de données 11 est, par exemple, initialisée lors d'une phase d'apprentissage du système et pourra être mise à jour au cours du fonctionnement du système selon l'invention.

Le même type de système peut être utilisé lors de la phase d'analyse d'un signal sonore ou flux audio. On parlera dans ce cas de phase de test. Le signal est détecté par le ou les capteurs acoustiques 20, puis va être traité de la même façon que dans le cas de l'apprentissage au moyen d'un filtre 21 et d'un module 22 réalisant l'extraction de paramètres acoustiques. Le processeur est adapté à exécuter les étapes du procédé selon l'invention qui seront détaillées ci-après. La sortie de la mémoire tampon 23 peut être reliée à un module classification de mots audio 24, puis ensuite à un autre dispositif d'analyse ou de traitement des données après analyse du flux audio (structuration d'un flux audio). Sur la base des mots audio obtenus par classification, le module 25 estime la vraisemblance des modèles statistiques préalablement appris et stockés en base de données 11. Le module 26 produit un ensemble de résultats 27 permettant l'analyse et la structuration du flux audio issu du capteur 20. Cette phase d'analyse peut être aussi dénommée phase de test.

En résumé, le procédé selon l'invention va mettre en oeuvre au moins les étapes suivantes en phase d'apprentissage et de test:

- la création non supervisée d'un dictionnaire de mots audio par une technique de regroupement ou « clustering » connue de l'Homme du métier (K-moyennes, EM (abréviation anglaise de Expectation-Maximisation) ou d'autres).
- le calcul de modèles PLSA ou LDA ou de modèles équivalents dans ce domaine technique pour un ensemble de tailles de documents variant d'une borne minimum à une borne maximum, générant une matrice de cooccurrence modélisant l'apparition des mots dans chacun des documents. Des modèles sont aussi calculés en faisant varier le retard de début d'analyse pour une même taille de documents.

Etape 1, E1 : extraction des paramètres acoustiques (phase d'apprentissage et de test).

La première étape correspond à l'extraction des paramètres acoustiques à partir du flux audio. Cette première étape permet d'extraire du flux audio des paramètres acoustiques qui vont être utilisés dans la suite du procédé pour analyser le signal sonore. Ces paramètres permettent notamment de représenter le signal audio dans un espace acoustique de dimension réduite. Les paramètres acoustiques qui vont être utilisés sont en général des paramètres spectraux, temporels ou spectro-temporels liés à la forme spectrale et temporelle du signal. Ces paramètres sont appelés vecteurs de paramètres acoustiques ou vecteurs de paramètres. Il est ainsi possible d'utiliser une modélisation de l'enveloppe spectrale du bruit capté par le capteur acoustique ou microphone, tels que les paramètres cepstraux ou vecteurs cepstraux. Le flux audio dans ce cas va être modélisé par une séquence de vecteurs cepstraux. Ces vecteurs de paramètres sont extraits de manière très classique connue de l'Homme du métier sur un support temporel constant et fixé au début de l'analyse. Par exemple, il est possible de travailler avec une fenêtre temporelle (ou trame) de quelques dizaines de milliseconde (ms). De plus et afin d'assurer une meilleure continuité des vecteurs, un recouvrement entre trame consécutives de 50% (5ms) est couramment utilisé. Avant extraction des paramètres chaque trame est pondérée avec une fenêtre de pondération (Hamming, Hanning, ...).

**Etape 2, E2 :** segmentation temporelle bas niveau (phase d'apprentissage et de test).

La seconde étape correspond à une segmentation temporelle bas niveau. Le premier niveau de segmentation permet notamment de sélectionner la finesse de l'analyse souhaitée. Elle peut être conduite de deux façons différentes :

- Segmentation uniforme avec des segments de taille fixe,
- Segmentation automatique avec des segments de taille variable.

Dans le cas de la segmentation uniforme, la taille des segments est prédéfinie et elle est issue d'un compromis temps de calcul et finesse de la segmentation finale par thème ou motif. La taille des segments produits est exactement un nombre fixe de trames produites en étape 1.

Dans le cas de la segmentation par Dendrogramme, la taille des segments est définie en nombre variable de trames. Un segment est donc une concaténation de trames consécutives. Dans ce cas la taille des segments est en accord avec les statistiques locales du signal audio à segmenter.

La seconde façon de procéder est basée sur une segmentation temporelle automatique bas niveau. Le nombre de trames par segment est variable et est déterminé par dendrogramme. De l'analyse d'une trame résulte un vecteur de paramètres qui est stocké dans la mémoire tampon 7. La taille de cette mémoire tampon (nombre de vecteurs mémorisés) est égale au nombre d'éléments (vecteurs dans le cas présent d'application) du dendrogramme. Cette taille qui représente la durée du segment est de l'ordre de quelques centaines de ms, voire quelques secondes pour des bruits de fond fortement stationnaires. La taille de la mémoire tampon est choisie, par exemple, de manière à incorporer au minimum un événement audio considéré a priori comme élémentaire.

Le dendrogramme est utilisé ici pour obtenir de manière automatique une segmentation du signal audio. Le principe consiste à regrouper dans une approche « bottom-up » les éléments en entrée du dendrogramme. Cette méthode permet d'obtenir une segmentation pour tous les différents niveaux possibles, autrement dit pour un nombre de segments allant du nombre initial d'éléments ou vecteurs à un segment unique. Dans le cas du bottom up on part de la découpe la plus fine (ie la découpe en trame) et on regroupe les trames pour en faire des segments. Donc le nombre maximum de segment est le nombre maximum de trames dans la mémoire tampon (éléments = trames)

A l'initialisation du procédé, chaque élément est le représentant de sa classe. Si P est le nombre d'éléments (vecteurs) en entrée du dendrogramme, il y a donc P classes au niveau le plus bas. Ensuite, le nombre de segments est décrémenté pour passer au niveau supérieur après regroupement des deux classes les plus proches selon un critère de distance définie en fonction des paramètres utilisés. Le critère est par exemple choisi en fonction du type de paramètres acoustiques qui ont été utilisés pour caractériser le fond sonore ou audio. Il existe plusieurs types de regroupements possibles selon la distance que l'on cherche à minimiser pour la sélection des classes à regrouper. Les 4 principales méthodes connues de l'Homme du métier sont les suivantes :

- distance minimale entre les vecteurs des classes ou en anglo-saxon « single linkage »,
- distance maximale entre les vecteurs des classes ou en anglo-saxon « complete linkage »,
- distance moyenne entre les vecteurs des classes ou en anglo-saxon ou en anglo-saxon « average linkage »,
- distance entre les vecteurs moyens (centroïdes) ou en anglo-saxon « centroid linkage».

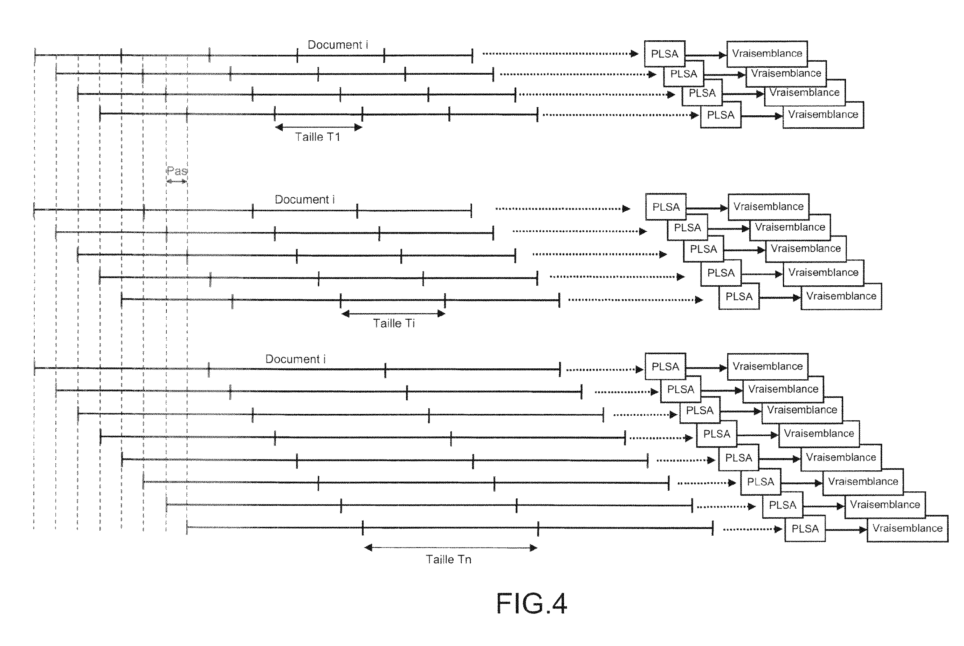

Sur la figure 4 est représenté un exemple de regroupements selon les N classes pour une approche bas-haut ou en anglo-saxon « Bottom-up » ; l'axe vertical correspondant aux vecteurs, l'axe horizontal schématisant la mémoire tampon du dendrogramme. A l'issue de ce regroupement, le procédé permet d'obtenir 3, puis 2, puis un vecteur représenté par une seule lettre R pour le regroupement.

Le procédé de segmentation automatique doit enfin sélectionner de manière automatique un niveau de segmentation qui sera considéré optimal selon un critère à définir.

Un premier critère consiste à appliquer un seuil Smax sur la distance entre les deux dernières classes regroupées (plus on monte dans les niveaux du dendrogramme plus la distance entre les classes à regrouper est grande). Il s'agit donc de minimiser le nombre de segments possibles tout en minimisant la distance de regroupement considérée.

D'autres critères peuvent être utilisés comme par exemple:

- le maximum Max sur les segments d'un même niveau du (Max sur les vecteurs d'un même segment (distance entre le vecteur et le vecteur moyen de la classe associée au segment)),
- le maximum Max sur les segments d'un même niveau du (Moyenne sur les vecteurs d'un même segment (distance entre le vecteur et le vecteur moyen de la classe associée au segment)),
- le minimum Min sur les segments d'un même niveau du (Min sur les vecteurs d'un même segment (inter-corrélation normalisée entre le vecteur et le vecteur moyen de la classe associée au segment)),
- le minimum Min sur les segments d'un même niveau du (Moyenne sur les vecteurs d'un même segment (inter-corrélation normalisée entre le vecteur et le vecteur moyen de la classe associée au segment)).

Les Notations alternatives pouvant être utilisées sont par exemple :

$$\underset{k=1,\ldots,P-j}{MAX}\left\{\underset{\mathbf{x}\in\text{Segment k}}{MAX}\left\{distance(\mathbf{x},\mathbf{c}_k)\right\}\right\}$$

$$\underset{k=1,\ldots,P-j}{MAX}\left\{\underset{\mathbf{x}\in\text{Segment k}}{MOYENNE}\left\{distance(\mathbf{x},\mathbf{c}_k)\right\}\right\}$$

$$\underset{k=1,\ldots,P-j}{MIN}\left\{\underset{\mathbf{x}\in\text{Segment k}}{MIN}\left\{corrélation(\mathbf{x},\mathbf{c}_k)\right\}\right\}$$

$$\underset{k=1,\ldots,P-j}{MIN}\left\{\underset{\mathbf{x}\in\text{Segment k}}{MOYENNE}\left\{corrélation(\mathbf{x},\mathbf{c}_k)\right\}\right\}$$

où j=indice de niveau = 0, ...,P-1 (Niveau 0 : P classes, Niveau P-1 : 1 classe)
où k = indice de segment (classe) pour le niveau j = 1,..., P-j

où x est un vecteur du segment (classe) d'indice k

où ck est le vecteur moyen (centroïde) du segment (classe) k.

Dans les cas 1) et 2), le critère de distance doit être inférieur à un seuil tout en minimisant le nombre de segments. Dans les cas 3) et 4), le critère de corrélation doit être supérieur à un seuil tout en minimisant le nombre de segment.

A l'issue de l'étape 2, le procédé dispose d'un ensemble de segment S de taille fixe ou variable qui caractérise le flux audio.

Les étapes 3 et 4 suivantes correspondent aux étapes de « clustering » et de classification et sont basées sur des procédés standards en reconnaissance de formes, par exemple. L'étape 3 est uniquement réalisée durant l'apprentissage alors que l'étape 4 est commune à l'apprentissage et au test. Le but est de modéliser l'espace acoustique en calculant des représentants ou « centroïdes » optimaux pour chaque classe de vecteurs similaires au sens d'une distance.

**Etape 3, E3 :** construction du dictionnaire de mot audio (phase d'apprentissage)

La troisième étape correspond à la Construction d'un dictionnaire par regroupements des segments similaires ou « clustering ». Cette création correspond à une création non supervisée du dictionnaire de mots audio par une technique classique de regroupement par classe ou « clustering » de type LBG, K-moyenne ou autres.

La segmentation décrite précédemment est appliquée à l'ensemble du signal audio à analyser. Les segments S ainsi obtenus sont regroupés par classe par un algorithme d'apprentissage du type LBG (Line-Buzo-Gray), par exemple. Cet algorithme permet d'associer chaque segment à une classe, elle-même représentée par un vecteur moyen ou centroide. Un critère simple de distance entre un segment et le centroide consiste à calculer la distance cumulée du centroide à chacun des vecteurs du segment considéré. La distance utilisée est la suivante :

$$d\left(S, \mathbf{c}_k\right) = \sum_{n=1}^{Nvecteurs} distance\left(\mathbf{x}_n, \mathbf{c}_k\right)$$

= distance entre le segment S et le centroide $c_k$ d'indice k

où $x_n$ est un vecteur du segment S, n = 1,... ,N_vecteurs.

Le nombre de classes peut, soit être fixé a priori, soit déterminé de manière automatique en utilisant un critère d'arrêt basé sur la distance minimale entre centroides, il n'est pas nécessaire d'augmenter le nombre de centroides si ceux-ci sont suffisamment proches selon un certain critère. La détermination du seuil utilisé pour ce critère d'arrêt peut être basée sur une distance spectrale quadratique. Cette distance spectrale peut généralement être calculée à partir des paramètres utilisés en calculant les enveloppes spectrales associées. Une alternative consiste à déterminer le seuil à partir de la corrélation entre les distances utilisées avec les paramètres et les distances spectrales.

Dans la mesure où certains événements normaux peuvent être sous-représentés, une version modifiée d'apprentissage consiste à utiliser un algorithme qui permet de positionner des centroides uniformément répartis dans l'espace des paramètres. Un exemple d'algorithme est explicité ci-après :

1. Calcul du vecteur moyen à partir de l'ensemble des données d'apprentissage.
2. Recherche du segment le plus éloigné du vecteur moyen et initialisation du premier centroide comme étant le vecteur moyen du segment trouvé (nb-classe = 1).
3. Itérations permettant d'incrémenter le nombre de classes (nb_classe = nb_classe + 1) : on recherche le segment qui maximise la distance cumulée aux centroïdes identifiés à l'itération précédente.
4. Critère d'arrêt : soit lorsque le nombre prédéfini de classes est atteint, soit lorsque la distance entre le segment trouvé et les centroïdes identifiés à l'itération précédente est inférieure à un seuil.

La phase précédemment décrite permet d'initialiser un dictionnaire de « mots audio » uniformément répartis dans l'espace des paramètres ou espace acoustique. Dans une seconde phase, une étape de classification de chaque segment est faite. Chaque segment est associé au centroide le plus proche au sens de la distance spectrale. Cette classification permet d'associer à chaque centroide un ensemble de segments. Le centroide de chaque classe est ensuite mis à jour en prenant le vecteur de paramètres moyen correspondant au vecteur calculé comme la moyenne des paramètres de chaque segment associées à une même classe.

C'est la méthode classiquement utilisé pour la mise jours de centroides (LBG, K-moyennes, ...).

A l'issue de ces étapes d'initialisation du système, un dictionnaire de M mots audio qui sont les centroides de chaque classe est disponible et va pouvoir être utilisé pour analyser le flux audio. Ce dictionnaire de mots audio est mémorisé dans la base de données.

Les étapes qui vont maintenant être décrites correspondent aux étapes de modélisation (apprentissage) et d'analyse (test) d'un flux audio ou signal audio reçus sur les capteurs du système d'analyse selon l'invention en utilisant les mots audio du dictionnaire.

**Etape 4, E4 :** classification floue de segments d'un flux audio (phase d'apprentissage et de test)

Une quatrième étape correspond à la classification floue de chaque segment d'un flux audio analysé par le système en utilisant le dictionnaire de mots audio déterminé à l'étape 3. Une méthode classiquement utilisée est de choisir pour représentant un mot du dictionnaire (lui-même étant un représentant d'une classe du dictionnaire) suivant un critère de distance ou de proximité.

Afin d'améliorer cette méthode classique, on fait intervenir une suite de degré d'appartenance aux classes du dictionnaire de classes utilisé. Dans ce cas un segment sera représenté comme une combinaison linéaire pondérée des distances aux M mots du dictionnaire (ou M classes du dictionnaire). Cette méthode est plus connue sous l'expression « Classification Floue » (ou sous le terme anglais « Fuzzy Clustering »). Chaque segment audio est associé à un sous ensemble (dont la taille Q<M est fixé à l'avance, par exemple Q=3) de classe du dictionnaire, représentées par leur centroide, à partir d'un vecteur de pondération, dont le degré d'appartenance $wf(S,k)$ d'indice k associé au centroide $c_k$ d'indice k (ou à la classe d'indice k) est donné par :

$$wf(S,k) = \frac{1}{\sum_{n=1}^{Q}\left[d(s,c_k)/d(s,c_n)\right]^{1/(F-1)}}$$

où F est l'indice flou (ou le paramètre qui caractérise le degré du flou) supérieur à 1.

Dans l'exemple donné, les Q=3 plus proches classes des chaque segment S sont choisies.

A l'issue de cette étape 4, on dispose d'un ensemble constitué de plusieurs segments d'un flux audio où chaque segment S d'un flux audio est caractérisé par Q mots du dictionnaire $Q_{k=1,...,Q}$ et les Q degrés d'appartenance $wf(S, k = 1, ..., Q)$. Un segment S est indexé avec les mots du dictionnaire. Cette indexation est relative à la quantification de l'espace acoustique obtenue par « clustering ».

L'optimum est calculé au sens de la distorsion globale estimée sur l'ensemble de segments disponibles et les centroïdes déjà calculés. Le processus est itératif et basé sur la minimisation de la distorsion. Après convergence, les centroïdes optimaux sont disponibles. La classification est ensuite réalisée en choisissant, pour chaque segment, le centroïde représente le mieux le segment S du flux audio analysé.

**Etape 5, E5a, E5b, E5c :** création de matrices de cooccurrence de mots audio et estimation/adaptation du modèle (phases d'apprentissage et de test)

La cinquième étape correspond à la création des matrices de cooccurrences puis à l'inférence des modèles thématiques statistiques.

Le calcul de modèles statistiques PLSA est réalisé pour un ensemble de tailles de documents variant d'une borne minimum à une borne maximum (paramètres du système). Ces modèles sont aussi calculés avec plusieurs valeurs de retards (ou début d'analyse) dans le flux audio pour une même taille de flux audio. Dans le cas de la segmentation bas niveau à taille constante ou segmentation uniforme, le retard est exprimé en nombre de trames. Dans le cas de la segmentation automatique, le retard est exprimé en nombre de segments.

Cette étape vise à produire pour un ensemble fini de segmentation candidat (taille $t_i$ de documents $d_i$, début $s_i$ de l'analyse du document d'indice i), un ensemble de vraisemblance issu de plusieurs modèles. La pluralité de paires (taille $t_i$ de documents $d_i$, début $s_i$ de l'analyse du document d'indice i) permet donc une analyse multi résolution dont la finesse temporelle est paramétrable.

Le modèle PLSA (Probabilistic Latent SemanticAnalysis) a été initialement proposé par T. Hofman ('Probablisitic Latent SemanticAnalysis', Proceedings of Uncertainty in Artificial Intelligence, UAI'99, Stockholm) et peut être considéré comme une version probabiliste de l'analyse sémantique latente (LSA). Le but est de décomposer un flux audio en un mélange de thèmes latents (thèmes cachés ou sujets cachés) définis comme une distribution multinomiale de mots d'un vocabulaire (ou dictionnaire).

Il est possible de générer des documents audio à partir d'un ensemble de mots audio et d'un modèle PLSA. Le modèle PLSA est décrit d'une part par la probabilité d'observer un mot sachant un thème et, d'autre part, par la probabilité d'observer un thème sachant un document.

Le modèle PLSA peut être appliqué pour découvrir des thèmes dans des documents audio en connaissant pour chaque segment S audio du signal à analyser les Q mots du dictionnaire les plus proches et les Q degrés d'appartenance wf(S, k).

Les documents audio sont considérés comme des variables aléatoires discrètes $d_j \in D = d_1,\cdots,d_N$, où N est le nombre de documents. Les mots sont représentés par une autre variable aléatoire discrète $w_i \in W = w_1,\cdots, w_M$, où M est le nombre de mots audio. Le modèle PLSA est un modèle statistique qui permet d'établir des liens entre une variable latente (thème ou sujet) $z_k \in Z = z_1,\cdots, z_k$ où K est le nombre de thèmes avec l'occurrence d'un mot dans un document. Le modèle PLSA est alors défini comme un mélange caractérisant un modèle de probabilité conjointe de documents et de mots

$$P(w_i, d_j) = P(d_j)P(w_i|d_j) = \sum_{k=1}^{K} P(w_i|z_k)P(z_k|d_j)$$

Le modèle ainsi défini est basé sur les probabilités suivantes :

- la probabilité d'un document $d_j$:$P(d_j)$
- la probabilité d'observer un mot $w_i$ sachant le thème$z_k$:$P(w_i|z_k)$,
- la probabilité d'observer le thème $z_k$ sachant le document $d_j$:$P(z_k|d_j)$.

Le modèle PLSA définit la probabilité conditionnelle d'un mot dans un flux audio $P(w_i|d_j)$ comme le mélange d'une distribution de mots relative à un thème $P(w_i|z_k)$. Les poids du mélange sont donnés par la distribution des thèmes dans un document $P(z_k|d_j)$. Les paramètres du modèle PLSA sont calculés en utilisant le principe du maximum de vraisemblance. Sur la base d'un ensemble de document audio D, la log-vraisemblance des paramètres du modèle P est donné par :

$$L(P|D) = \sum_{i=1}^{M} \sum_{j=1}^{N} n(w_i, d_j) \log P(w_i, d_j)$$

L'optimisation de cette équation est réalisée en utilisant, par exemple, l'algorithme EM (abréviation anglaise de Expectation-Maximisation) sur l'ensemble des documents audio. En fonction de la phase (apprentissage ou test), deux utilisations différentes de l'algorithme EM sont envisagée :

- Phase d'apprentissage : EM complet,
- Phase de test : EM réduit afin d'adapter les modelés existants aux données de test.

**Etape E5.a :** Calcul de la matrice de cooccurrence (phases d'apprentissage et de test)

Cette étape réside en l'estimation de la matrice M x N de cooccurrence dont les termes $n(w_i,d_j)$ sont les coefficients de cooccurrence des mots wi dans le document dj. Ces termes sont mis à jour pour chaque segment S des documents audio en utilisant pour chacun des mots du segment S, les Q mots audio et les Q degrés d'appartenance wf(S, k = 1,..., Q).

Soient wf(S, k = 1, ..., Q) les degrés d'appartenance aux Q classes k associés par classification floue du segment S et soient $\{S_j(p = 1, ...,NS(j))\}$ les $Ns(j)$ segments S du document audio $d_j \in D$. Pour chaque document audio $d_j \in D$ et pour chaque mot audio, $w_i \in W$, $n(w_i, d_j)$ est donné par :

$$n(w_i, d_j) = \sum_{p=1}^{N_s(j)} wf(S_j(p), i)$$

**Etape E5.b :** Estimation du modèle PLSA (phase d'apprentissage)

Cette étape permet l'estimation des paramètres du modèle PLSA en maximisant la log-vraisemblance des paramètres du modèle P donné par (Algorithme EM complet) :

$$L(P|D) = \sum_{i=1}^{M} \sum_{j=1}^{N} n(w_i, d_j) \log P(w_i, d_j)$$

A l'issu de cette étape, les paramètres du modèle PLSA sont stockés en base de données.

**Etape E5.c :** Adaptation du modèle PLSA aux données de test (phase de test)

Cette étape réside en la détermination des paramètres du modèle PLSA (algorithme EM réduit) puis en l'estimation de la log-vraisemblance de ce modèle inféré pour le document $d_{test}$ suivant la formule :

$$L(W|d_{test}) = \sum_{i=1}^{M} n(w_i, d_{test}) \log \sum_{k=1}^{K} P(w_i|z_k) P(z_k|d_{test})$$

Une forte vraisemblance est l'indication de la bonne adéquation du modèle PLSA aux données audio traitées.
Cette étape vise à produire pour un ensemble fini de segmentation candidate (taille de document $t_i$, début de l'analyse du flux audio $s_i$), un ensemble de vraisemblance issu de plusieurs modèles. La pluralité de paires (taille de document, début de l'analyse) permet donc une analyse multi résolution dont la finesse temporelle est paramétrable. De manière plus détaillée, cette étape est structurée en deux étapes distinctes :

- pour chaque paire $(t_i, s_i)$ et sur toute la durée du signal, une matrice de cooccurrence est estimée. Cette matrice a pour but de modéliser de quelle manière apparaissent les mots audio dans chaque document. La manière classique est simplement de compter pour chaque document le nombre d'occurrence des mots. Cette méthode présuppose d'avoir une très bonne définition des mots. Dans le cas des signaux audio variables dans le temps cette définition est généralement très difficile à obtenir. De façon à améliorer cette méthode le procédé va utiliser comme coefficient d'occurrence une combinaison de degré d'appartenance aux classes du dictionnaire audio associé à chaque mot de chaque document (étape 5.a). Ces coefficients sont directement déduits de l'étape de classification (étape 4).
- pour chaque paire (taille de document, début de l'analyse) sur toute la durée du signal et sur la base d'une matrice de cooccurrence (estimée comme décrit en 5.a), un modèle statistique thématique est estimé (phase d'apprentissage). De la même façon, la vraisemblance de ce modèle pour chacun des documents est aussi calculée (phase de test).

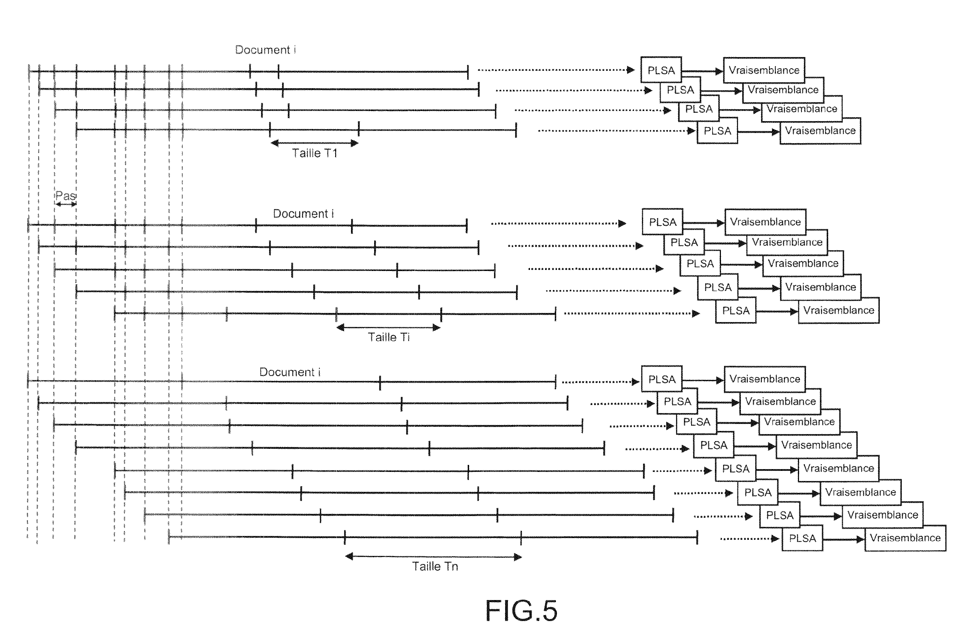

Le point important des étapes 5.a, 5.b et 5.c réside dans la taille des documents. En effet, la taille des documents est fixée dès la création de la matrice de cooccurrence de taille M x N (ou N est le nombre de flux audio et M est le nombre de mots audio). Le nombre de mots audio est fixe et issu des étapes 3 et 4. Le nombre de documents audio pour un signal donné est lié à la taille du flux audio lui-même.
En se donnant, pour un même signal audio, la possibilité de choisir un nombre de flux audio variable, il est alors possible de choisir des documents de taille variable. Si de plus, toujours pour un même signal audio, le procédé spécifie des instants de débuts d'analyse différents, il est possible d'obtenir un schéma multi-résolution d'analyse et d'inférence de modèles PLSA (figure 4 dans le cas d'une segmentation bas niveau à trame de taille fixe et figure 5 dans le cas d'une segmentation bas niveau à taille variable). Donc pour un même signal et pour une pluralité de paires (taille de document, début d'analyse), il est possible d'obtenir une pluralité de vraisemblances associées à une taille de document et une position temporelle dans le flux audio à analyser.
A l'issue de cette étape, un ensemble de vraisemblances $l_i$ associées à un ensemble de taille de document $t_i$ dont les tailles minimum tmin et maximum tmax sont des paramètres du système, et à un ensemble de positions temporelles $s_i$ (instant d'analyse temporel du signal), est produit-en suivant un schéma d'analyse multi-résolution.

La figure 4 présente le schéma multi-résolution proposée sur la base d'une segmentation bas niveau à trame de taille fixe (20 ms). Toutes les analyses PLSA sont faites sur des documents de taille multiples de la taille de la trame initiale. Le retard et donc la position temporelle de chaque analyse est elle aussi égale à la taille d'une trame de 20 ms.

La figure 5 présente le schéma multi-résolution proposée sur la base d'une segmentation bas niveau à trame de taille variable et multiple de la taille de la fenêtre d'extraction des vecteurs acoustiques (20 ms). Toutes les analyses PLSA sont effectuées sur des documents de taille exprimée en nombre de segment. Le retard et donc la position temporelle de chaque analyse est elle aussi égale à la taille du segment courant (et donc multiple de 20 ms).

Les deux schémas proposés garantissent un parfait synchronisme de toutes les analyses et ce quelle que soit la taille des documents. C'est-à-dire et plus précisément, quelle que soit la taille d'un document, il est possible de trouver un document de taille différente qui débute immédiatement après (figure 4 et figure 5). Le synchronisme de l'analyse multi résolution est donc assuré. L'objet de l'étape suivante est de trouver quel est le chemin optimal en termes de vraisemblance maximale des modèles PLSA sous la contrainte que les documents ne se recouvrent pas temporellement.

**Etape E6 :** Segmentation optimale (phase de test)

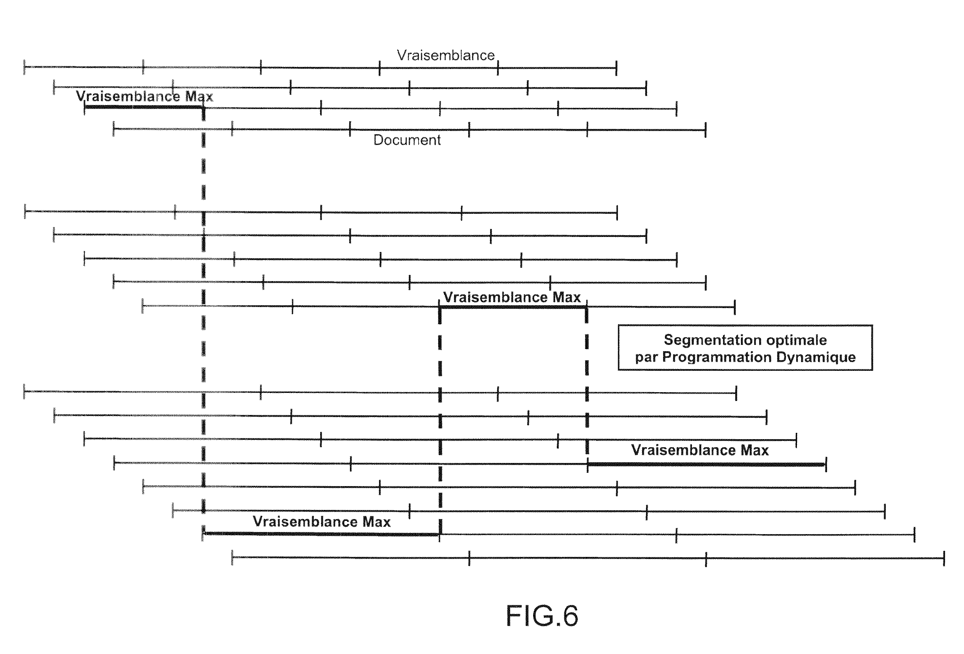

La sixième étape correspond à la recherche de la segmentation optimale au sens du maximum de vraisemblance sous la contrainte de sélectionner des documents sans recouvrement temporel.
Le choix de la structuration optimale (taille et position de chacun des documents) est alors obtenu à partir d'un algorithme de type Programmation Dynamique, appliqué aux mesures de vraisemblance associée à chaque hypothèse de document. Chaque hypothèse de document est caractérisée par un triplet (durée du document, début de l'analyse et vraisemblance). Cette étape est décrite dans la figure 6. Le résultat final est la production d'une segmentation optimale au sens de la vraisemblance des thèmes estimés. Cette segmentation est robuste aux variations de statistiques locales et permet d'avoir un niveau d'interprétation plus simple pour un opérateur de surveillance.
Dans l'exemple donné pour illustrer l'invention, le problème est un problème de recherche d'intervalles compatibles sous la contrainte de poids maximum. En effet, chaque document possède une taille $t_i$, un instant de début $s_i$, de fin $f_i$.et une vraisemblance ou poids $l_i$. La notion de compatibilité est définie par le fait que la suite d'intervalles soit croissante dans le temps et qu'aucun intervalle ne se recouvre en temps. C'est un sous problème de la Programmation Dynamique appelée aussi Ordonnancement d'Intervalles Pondérés (WeightedIntervalSceduling).
Dans les problèmes d'ordonnancement d'intervalles pondérés, l'objectif est de trouver le ou les sous-ensembles compatibles d'intervalles (ou documents dans notre système) sans recouvrement temporel et dont la somme des poids (ou vraisemblance dans notre système) est la plus forte. On peut aussi accepter dans le chemin optimal des segments disjoints.
Soit un ensemble D de documents $d_i \in D = d_1, ..., d_N$ qui possèdent tous une vraisemblance associée $l_i$. Le document $i \in D$ est caractérisé par un instant de début $s_i$ et un instant de fin $f_i$.le procédé va chercher un sous ensemble optimal 0 de documents sans recouvrement temporel dont la somme des vraisemblances est maximale. Le problème précédemment énoncé peut s'écrire de la manière suivante :

$$O = \operatorname{argmax}_{O \subseteq D; \forall i,j \in O \text{ avec } f_i \leq s_j \text{ou} f_j \leq s_i} \sum_{i \in O} l_i$$

Pour $1 \leq i \leq n$, posons valeur(i) comme le maximum de la somme des vraisemblances des documents qui ne se recouvrent pas et ayant comme indice au moins i. La solution optimale à un instant $j \geq i$ sera issue de la solution optimale précédente à laquelle on ajoutera le plus fort poids d'un document candidat j à déterminer parmi la liste des documents compatible de la solution optimale à l'instant j. Sous cette hypothèse et selon le théorème de Bellman connu de l'Homme du métier, on obtient alors :

$$\text{valeur(i)} = \max (l_i + \text{valeur(j)}, \text{valeur(i + 1)})$$

avec j qui est égale à l'index du premier document qui commence après que le document i se termine.
Pour mettre en oeuvre ce théorème, le procédé utilise l'algorithme suivant afin de trouver la somme des vraisemblances correspondant à l'ordonnancement optimum:

• Trier les documents en ordre croissant de date de début
• Pour $1 \leq i \leq n$, trouver les plus petits $j \geq i$ tel que le document j ne recouvre pas le document i.
• Pour i = n jusqu'à 1, calculer valeur(i) puis la stocker avec le chemin correspondant (i.e. la suite optimale de documents)

La somme de l'ordonnancement optimale est égal à valeur(1).

A l'issue de cette étape, l'ordonnancement optimal des documents est estimé. Ce trajet ou chemin optimal, dans un treillis multi résolution des valeurs de vraisemblance relative à la pertinence des modèles PLSA, nous permet d'obtenir une segmentation optimale en termes de taille de document tout en conservant des liens avec les thèmes. Ceci est l'objectif final du présent système.

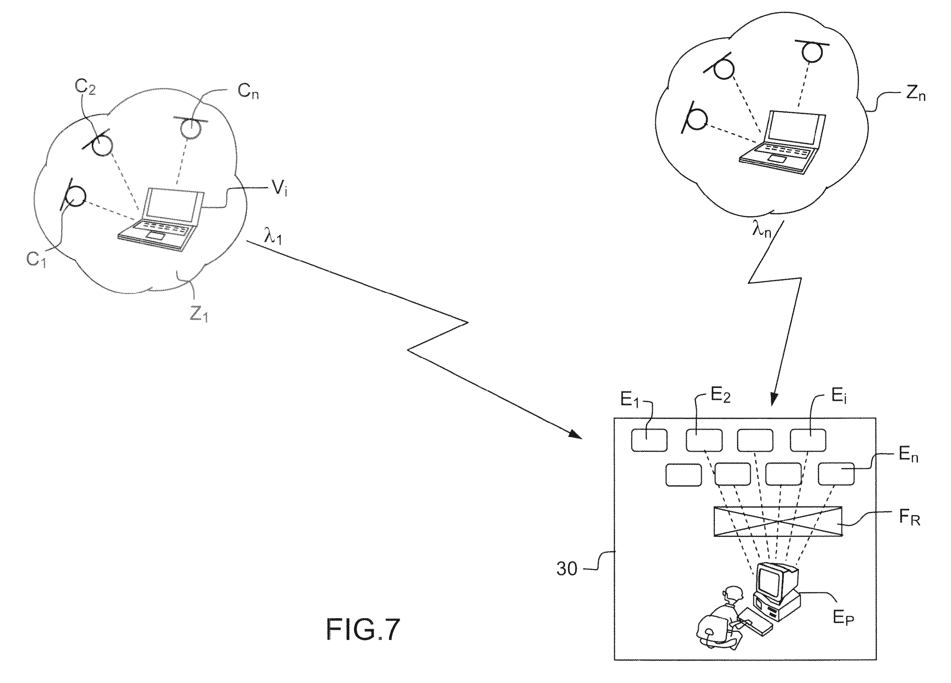

La figure 7 schématise un exemple d'architecture comprenant plusieurs dispositifs permettant d'enregistrer des sons audio ou flux audio tels que des capteurs acoustiques Ci. L'ensemble ainsi formé est relié, par exemple, à un calculateur Pi comportant un module de reconnaissance d'évènements anormaux, et une base de données contenant des modèles pour reconnaître les évènements anormaux. Chaque calculateur Pi est relié à un central ou salle de surveillance comprenant, par exemple, plusieurs écrans Ei de surveillance. Les liaisons permettant le transfert des données d'un dispositif à un autre sont, par exemple, des liaisons filaires, ou des liaisons sans fil, de type Bluetooth ou encore, le système fait partie d'un réseau local sans fil ou WLAN (wireless local area network).

Le système et le procédé selon l'invention proposent une analyse/structuration sur la base d'une interprétation thématique, plus riche que les interprétations classiques basées sur une détection locale d'évènements unitaires spécifiques et/ou anormaux. La procédure est non supervisée et donc elle ne nécessite aucune connaissance a priori des thèmes et des concepts.

L'invention permet notamment de détecter des ensembles et/ou des suites d'évènements sonores caractéristiques et représentatifs d'un environnement, d'offrir des solutions robustes au bruit de fond et à ses variabilités.

Elle ne requiert que très peu de paramètres, il suffit de préciser la taille du dictionnaire de mots audio, la taille minimum et maximum est documents et la résolution temporelle de l'analyse (retards dans le flux) de la modélisation PLSA/LDA, par exemple, en particulier aucun seuil n'est requis.

Un autre avantage est l'automatisation de la chaîne de traitement, ce qui facilite son adaptation à un nouveau scénario ou un nouvel environnement, ainsi que son adaptation au cours du temps.

## Revendications

1. Procédé non supervisé d'analyse et de structuration thématique d'un flux audio, ledit flux audio comprenant un ensemble de documents constitués chacun de plusieurs segments, ledit flux audio comprenant un ou plusieurs motifs ou thèmes répétés dans le temps **caractérisé en ce qu'**il comporte au moins les étapes suivantes :

   • Extraire les paramètres acoustiques du flux audio à analyser, E1
   • Une étape de segmentation bas niveau dudit flux audio afin d'obtenir un ensemble de segments S, E2, un segment correspondant à une concaténation de trames successives,
   • Une étape de classification floue desdits segments en utilisant un dictionnaire de M mots audio prédéfinis, afin de caractériser chaque segment S avec un ensemble de Q mots audio et de Q degrés d'appartenance wfk d'un segment à une classe, E4, un mot audio étant le représentant d'une classe, une classe étant définie comme un ensemble de segments similaires,
   • Générer une matrice de cooccurrence pour chaque document dudit flux audio, un élément n(wi, dj) de la matrice de cooccurrence correspond à une combinaison des degrés d'appartenance de tous les mots du document dj proche de la classe i au sens de la classification floue, la taille M*N de la matrice correspond au nombre M de mots audio et N au nombre de documents, E5a,
   • Pour un ensemble fini de segmentation, taille de document ti, début de l'analyse du flux audio, et sur la base de la matrice de cooccurrence associée, déterminer, par adaptation de modèles statistiques prédéfinis les vraisemblances li associées à chaque couple (taille de document ti, début d'analyse), E5c, la taille de document appartenant à un intervalle prédéfini [tmin, tmax],
   • Rechercher la segmentation optimale en termes de taille de document, au sens du maximum de vraisemblance pour chaque triplet (taille du document, début d'analyse, vraisemblance) par application d'un algorithme de type programmation dynamique, E6, sous la contrainte de sélectionner des documents sans recouvrement temporel.

2. Procédé selon la revendication 1 **caractérisé en ce qu'**il comporte une étape d'apprentissage adaptée à générer le dictionnaire des mots audio et les modèles statistiques prédéfinis comprenant au moins les étapes suivantes :

   • Extraire les paramètres acoustiques du flux audio à analyser, E1
   • Une étape de segmentation bas niveau dudit flux audio afin d'obtenir un ensemble de segments S,E2
   • Une étape de construction non supervisée d'un dictionnaire de mots audio,E3
   • Une étape de classification floue desdits segments en utilisant un dictionnaire de mots audio prédéfinis, afin de caractériser un segment S avec un ensemble de Q mots audio et Q degrés d'appartenance wfk d'un mot à une classe, E4,

• Générer une matrice de cooccurrence pour chaque document dudit flux audio, un élément n(wi, dj) de la matrice correspond à une combinaison des degrés d'appartenance de tous les mots du document dj proche de la une classe i, au sens de la classification floue, la taille de la matrice correspond au nombre M de mots et au nombre de documents M*N, afin de modéliser la manière dont les mots audio apparaissent dans un document, E5a

• Estimer des modèles statistiques à même de décomposer un flux audio en un mélange de thèmes définis comme une distribution multinomiale de mots d'un dictionnaire représentatifs de la probabilité conditionnelle d'observer d'un mot dans un flux audio, E5b.

3. Procédé selon l'une des revendications 1 ou 2 **caractérisé en ce que** l'étape de segmentation bas niveau est une segmentation uniforme avec des segments de taille fixe.

4. Procédé selon l'une des revendications 1 ou 2 **caractérisé en ce que** l'étape de segmentation bas niveau est exécutée avec des segments de taille variable.

5. Procédé selon la revendication 4 **caractérisé en ce que** l'étape de segmentation bas niveau est une segmentation par dendrogramme.

6. Procédé selon la revendication 2 **caractérisé en ce que** la construction non supervisée du dictionnaire de mots audio est exécutée en regroupant les segments par classe à l'aide d'un algorithme de type LBG.

7. Procédé selon la revendication 2 **caractérisé en ce que** l'on utilise un modèle statistique de type PLSA défini comme un mélange caractérisant un modèle de probabilité conjointe de documents et de mots.

8. Procédé selon la revendication 2 ou la revendication 7 **caractérisé en ce que** l'on estime les paramètres du modèle PLSA en maximisant la log-vraisemblance donnée par un algorithme de type EM (Expectation Maximisation).

9. Procédé selon la revendication 1 **caractérisé en ce que** l'algorithme de programmation dynamique met en oeuvre un algorithme d'ordonnancement d'intervalles pondérés.

10. Système non supervisé d'analyse et de structuration thématique d'un flux audio, ledit flux audio comprenant un ensemble de documents constitués chacun de plusieurs segments, ledit flux audio comprenant un ou plusieurs motifs ou thèmes répétés dans le temps, ledit système étant adapté à mettre en oeuvre le procédé selon l'une des revendications 1 à 9 **caractérisé en ce qu'**il comporte au moins les éléments suivants :

    • Une base de données (11) comprenant un dictionnaire préétabli de mots audio, et des modèles statistiques,
    • Un ou plusieurs capteurs acoustiques (2, 20) reliés à un module d'analyse comprenant un premier module (22) d'extraction des paramètres acoustiques dudit flux audio, ledit premier module étant relié à une mémoire tampon (23), la sortie de la mémoire tampon étant reliée à un module de classification floue (24) desdits segments issus de la mémoire tampon (23), un module de construction de matrices de cooccurrence et d'adaptation des modèles (25), un module (26) adapté à déterminer la vraisemblance des modèles statistiques prédéfinis et un module de recherche de segmentation optimale exécutant un algorithme de type programmation dynamique appliqué aux mesures de vraisemblance.

11. Système selon la revendication 10 **caractérisé en ce qu'**il comporte une chaîne d'apprentissage comprenant au moins les éléments suivants :

    un ou plusieurs capteurs acoustiques(2), un dispositif (3) comprenant un filtre et un convertisseur analogique puis un module (6) adapté à extraire des paramètres acoustiques et une mémoire tampon (7) reliée à un module (8) de création de mots audio et un module de classification (9) et un module (10) de création de modèles statistiques, l'ensemble des mots audio et des modèles statistiques issus de ce module d'apprentissage sont mémorisés dans une base de données (11).

**Patentansprüche**

1.  Nicht überwachtes Verfahren für eine Analyse und thematische Strukturierung eines Audiostroms, wobei der Audiostrom eine Gruppe von Dokumenten umfasst, die jeweils aus mehreren Segmenten gebildet sind, wobei der Audiostrom ein oder mehrere Motive oder Themen umfasst, die in der Zeit wiederholt werden, **dadurch gekennzeichnet, dass** es mindestens die folgenden Schritte aufweist:

    Extrahieren der akustischen Parameter aus dem zu analysierenden Audiostrom, E1,
    einen Schritt der Niederniveau-Segmentierung des Audiostroms, um eine Gruppe von Segmenten S zu erhalten, E2, wobei ein Segment einer Konkatenation aufeinanderfolgender Raster entspricht,
    einen Schritte der unscharfen Klassifizierung der Segmente unter Verwendung eines Diktionärs von M vordefinierten Audiowörtern, um jedes Segment S mit einer Gruppe von Q Audiowörtern und von Q Zugehörigkeitsgraden wfk eines Segments zu einer Klasse zu charakterisieren, E4, wobei ein Audiowort der Vertreter einer Klasse ist, wobei eine Klasse als eine Gruppe ähnlicher Segmente definiert ist,
    Generieren einer Kookkurenzmatrix für jedes Dokument des Audiostroms, wobei ein Element n(wi, dj) der Kookkurrenzmatrix einer Kombination der Zugehörigkeitsgrade aller Wörter des Dokuments dj entspricht, das im Sinne der unscharfen Klassifizierung der Klasse i nah ist, wobei die Größe M*N der Matrix der Anzahl M von Audiowörtern und N der Anzahl der Dokumente entspricht, E5a,
    für eine abgeschlossene Segmentierungsgruppe, Dokumentengröße ti, Beginn der Analyse des Audiostroms, und auf der Basis der zugeordneten Kookkurrenzmatrix, Bestimmen, durch Anpassung vorbestimmter statistischer Modelle, die jedem Paar (Dokumentengröße ti, Analysebeginn) zugeordneten Wahrscheinlichkeiten, E5c, wobei die Dokumentengröße zu einem vorbestimmten Intervall [tmin, tmax] gehört,
    Suchen der optimalen Segmentierung im Hinblick auf Dokumentengröße im Sinn der maximalen Wahrscheinlichkeit für jedes Triplett (Dokumentengröße, Analysebeginn, Wahrscheinlichkeit) durch Anwendung eines Algorithmus vom Typ dynamische Programmierung, E6, mit der Maßgabe der Auswahl der Dokumente ohne zeitliche Überlappung.

2.  Verfahren nach Anspruch 1, **dadurch gekennzeichnet, dass** es einen Lernschritt aufweist, der geeignet ist, das Diktionär der Audiowörter und die vordefinierten statistischen Modelle zu generieren, das mindestens die folgenden Schritte umfasst:

    Extrahieren der akustischen Parameter aus dem zu analysierenden Audiostrom, E1,
    einen Schritt der Niederniveau-Segmentierung des Audiostroms, um eine Gruppe von Segmenten S zu erhalten, E2,
    einen Schritt des nicht überwachten Aufbaus eines Audiowörter-Diktionärs, E3,
    einen Schritte der unscharfen Klassifizierung der Segmente unter Verwendung eines Diktionärs von vordefinierten Audiowörtern, um ein Segment S mit einer Gruppe von Q Audiowörtern und Q Zugehörigkeitsgraden wfk eines Worts zu einer Klasse zu charakterisieren, E4,
    Generieren einer Kookkurenzmatrix für jedes Dokument des Audiostroms, wobei ein Element n(wi, dj) der Matrix einer Kombination der Zugehörigkeitsgrade aller Wörter des Dokuments dj entspricht, das im Sinne der unscharfen Klassifizierung der einen Klasse i nah ist, wobei die Größe der Matrix der Anzahl M der Audiowörter und der Dokumentenanzahl M*N entspricht, um die Art und Weise zu modellieren, in der die Audiowörter in einem Dokument erscheinen, E5a,
    Bewerten der statistischen Modelle, die imstande sind, einen Audiostrom in eine Mischung definierter Themen wie eine multinomiale Verteilung von Wörter des Diktionärs, die für die konditionelle Probabilität repräsentativ sind, ein Wort in einem Audiostrom zu beobachten, zu zerlegen, E5b.

3.  Verfahren nach einem der Ansprüche 1 oder 2, **dadurch gekennzeichnet, dass** der Schritt der Niederniveau-Segmentierung eine gleichmäßige Segmentierung mit Segmenten fester Größe ist.

4.  Verfahren nach einem der Ansprüche 1 oder 2, **dadurch gekennzeichnet, dass** der Schritt der Niederniveau-Segmentierung mit Segmenten variabler Größe durchgeführt wird.

5.  Verfahren nach Anspruch 4, **dadurch gekennzeichnet, dass** der Schritt der Niederniveau-Segmentierung eine Segmentierung durch Dendrogramm ist.

6.  Verfahren nach Anspruch 2, **dadurch gekennzeichnet, dass** der nicht überwachte Aufbau des Audiowörter-Diktionärs durch Gruppieren der Segmente nach Klasse mit Hilfe eines Algorithmus vom Typ LBG durchgeführt wird.

7. Verfahren nach Anspruch 2, **dadurch gekennzeichnet, dass** ein statistisches Modell vom Typ PLSA, das als eine Mischung definiert ist, die ein Modell gemeinsamer Probabilität von Dokumenten und von Wörtern charakterisiert, verwendet wird.

8. Verfahren nach Anspruch 2 oder Anspruch 7, **dadurch gekennzeichnet, dass** die Parameter des Modells PLSA durch Maximieren der log-Wahrscheinlichkeit, die von einem Algorithmus vom Typ EM (Expectation Maximisation) gegeben ist, bewertet wird.

9. Verfahren nach Anspruch 1, **dadurch gekennzeichnet, dass** der Algorithmus der dynamischen Programmierung einen Organisationsalgorithmus gewichteter Intervalle umsetzt.

10. Nicht überwachtes System für eine Analyse und thematische Strukturierung eines Audiostroms, wobei der Audiostrom eine Gruppe von Dokumenten umfasst, die jeweils aus mehreren Segmenten gebildet sind, wobei der Audiostrom ein oder mehrere Motive oder Themen umfasst, die in der Zeit wiederholt werden, wobei das System geeignet ist, das Verfahren nach einem der Ansprüche 1 bis 9 umzusetzen, **dadurch gekennzeichnet, dass** es mindestens die folgenden Elemente aufweist:

eine Datenbank (11), die ein vorher erstelltes Audiowörter-Diktionär umfasst, und statistische Modelle, einen oder mehrere akustische Sensoren (2, 20), die mit einem Analysemodul verbunden sind, das ein erstes Extraktionsmodule (22) der akustischen Parameter des Audiostroms umfasst, wobei das erste Modul mit einem Pufferspeicher (23) verbunden ist, wobei der Ausgang des Pufferspeichers mit einem Modul der unscharfen Klassifizierung (24) der Segmente aus dem Pufferspeicher (23) verbunden ist, ein Konstruktionsmodul von Kookkurrenz- und Modellanpassungsmatrizes (25), ein Modul (26), das geeignet ist, die Wahrscheinlichkeit der vorbestimmten statistischen Modelle zu bestimmen und ein Ermittlungsmodul der optimalen Segmentierung, das einen Algorithmus vom Typ dynamische Programmierung ausübt, der auf die Wahrscheinlichkeitsmessungen angewendet wird.

11. System nach Anspruch 10, **dadurch gekennzeichnet, dass** es eine Lernkette aufweist, die mindestens die folgenden Element umfasst:

einen oder mehrere akustische Sensoren (2), eine Vorrichtung (3), die einen Filter und einen analogen Wandler umfasst, dann ein Modul (6), das ausgebildet ist, akustische Parameter zu extrahieren, und einen Pufferspeicher (7), der mit einem Modul (8) für die Bildung von Audiowörtern verbunden ist, und ein Klassifzierungsmodul (9) und ein Modul (10) für die Bildung von statistischen Modellen, wobei die Gruppe der Audiowörter und der statistischen Modelle aus diesem Lernmodul in einer Datenbank (11) gespeichert sind.

**Claims**

1. A non-supervised method of thematic analysis and structuring of an audio stream, said audio stream comprising a set of documents each consisting of several segments, said audio stream comprising one or more patterns or themes repeated over time, **characterized in that** it comprises at least the following steps:

• Extracting the acoustic parameters of the audio stream to be analyzed, E1
• A step of low-level segmentation of said audio stream so as to obtain a set of segments S, E2, a segment corresponding to a concatenation of consecutive frames,
• A step of fuzzy classification of said segments by using a dictionary of M predefined audio words, so as to characterize each segment S with a set of Q audio words and of Q degrees of membership wfk of a segment in a class, E4, an audio word being the representative of a class, a class being defined as a set of a similar segments,
• Generating a cooccurrence matrix for each document of said audio stream, an element n(wi, dj) of the cooccurrence matrix corresponds to a combination of the degrees of membership of all the words of the document dj which is close to the class i in the sense of the fuzzy classification, the size M*N of the matrix corresponds to the number M of audio words and N to the number of documents, E5a
• For a finite segmentation set, document size ti, start of the analysis of the audio stream, and on the basis of the associated cooccurrence matrix, determining, by adaptation of predefined statistical models, the likelihoods li associated with each pair (document size ti, start of analysis), E5c, the document size belonging to a predefined interval [tmin, tmax],

• Seeking the optimal segmentation in terms of document size, in the sense of the maximum likelihood for each triplet (size of the document, start of analysis, likelihood) by application of an algorithm of dynamic programming type, E6, under the constraint of selecting documents without temporal overlap.

2. The method as claimed in claim 1, **characterized in that** it comprises a learning step adapted for generating the dictionary of the audio words and the predefined statistical models comprising at least the following steps:

• Extracting the acoustic parameters of the audio stream to be analyzed, E1
• A step of low-level segmentation of said audio stream so as to obtain a set of segments S,E2
• A step of non-supervised construction of a dictionary of audio words,E3
• A step of fuzzy classification of said segments by using a dictionary of predefined audio words, so as to characterize a segment S with a set of Q audio words and Q degrees of membership wfk of a word in a class, E4,
• Generating a cooccurrence matrix for each document of said audio stream, an element n(wi, dj) of the matrix corresponds to a combination of the degrees of membership of all the words of the document dj close to the one class i, in the sense of the fuzzy classification, the size of the matrix corresponds to the number M of words and to the number of documents M*N, so as to model the way in which the audio words appear in a document, E5a
• Estimating statistical models able to decompose an audio stream into a mixture of themes defined as a multinomial distribution of words of a dictionary which are representative of the conditional probability of observing a word in an audio stream, E5b.

3. The method as claimed in one of claims 1 and 2, **characterized in that** the low-level segmentation step is a uniform segmentation with segments of fixed size.

4. The method as claimed in one of claims 1 and 2, **characterized in that** the low-level segmentation step is executed with segments of variable size.

5. The method as claimed in claim 4, **characterized in that** the low-level segmentation step is a segmentation by dendrogram.

6. The method as claimed in claim 2, **characterized in that** the non-supervised construction of the dictionary of audio words is executed by grouping the segments together by class with the aid of an algorithm of LBG type.

7. The method as claimed in claim 2, **characterized in that** use is made of a statistical model of PLSA type defined as a mixture characterizing a model of joint probability of documents and of words.

8. The method as claimed in claim 2 or claim 7, **characterized in that** the parameters of the PLSA model are estimated by maximizing the log-likelihood given by an algorithm of EM (Expectation Maximization) type.

9. The method as claimed in claim 1, **characterized in that** the dynamic programming algorithm implements a weighted intervals scheduling algorithm.

10. A non-supervised system for thematic analysis and structuring of an audio stream, said audio stream comprising a set of documents each consisting of several segments, said audio stream comprising one or more patterns or themes repeated over time, said system being adapted for implementing the method as claimed in one of claims 1 to 9, **characterized in that** it comprises at least the following elements:

• A database (11) comprising a pre-established dictionary of audio words, and statistical models,
• one or more acoustic sensors (2, 20) linked to an analysis module comprising a first module (22) for extracting the acoustic parameters of said audio stream, said first module being linked to a buffer memory (23), the output of the buffer memory being linked to a module for fuzzy classification (24) of said segments arising from the buffer memory (23), a module for constructing cooccurrence matrices and for adapting the models (25), a module (26) adapted for determining the likelihood of the predefined statistical models and an optimal segmentation search module executing an algorithm of dynamic programming type applied to the likelihood measurements.

11. The system as claimed in claim 10, **characterized in that** it comprises a learning chain comprising at least the following elements:

one or more acoustic sensors (2), a device (3) comprising a filter and an analog converter and then a module (6) adapted for extracting acoustic parameters and a buffer memory (7) linked to a module (8) for creating audio words and a classification module (9) and a module (10) for creating statistical models, the set of audio words and statistical models arising from this learning module are stored in a database (11).

EP 2 766 825 B1

Filtre
CAN

E1

E2
Mémoire
tampon

E3
Dico mots
audio

E4
Classification

E5a et E5b
Modèles

{Dico mots audio}

{modèles}

Filtre
CAN

E1

E2
Mémoire
tampon

E4
Classification

E5a et E5c
Adaptation
modèle

E6
PD

{Segmentation
thématique}

Modèles

Mots audio

FIG.1

FIG.2

FIG.3

FIG.4

FIG.5

FIG.6

FIG.7

EP 2 766 825 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YUXIN PENG et al.** Semantic concept annotation based on audio PLSA model. *Proceedings of the 17th ACM international conférence on multimedia,* 19 Octobre 2009, 841-844